# EUROPÄISCHE PATENTANMELDUNG

(11) **EP 1 460 391 A1**
(43) Veröffentlichungstag der Anmeldung: **22.09.2004**
(21) Anmeldenummer: 04001516.6
(22) Anmeldetag: 24.01.2004
(51) Int. Cl.: G01D 11/24

(54) **Halter für einen Sensor**

(30) Priorität: 19.03.2003 DE 20304602 U
(71) Anmelder: Valeo Schalter und Sensoren GmbH, 74321 Bietigheim-Bissingen (DE)
(72) Erfinder: Wiethoff, Swen, 71063 Sindelfingen (DE)
(74) Vertreter: Dreiss, Fuhlendorf, Steimle & Becker

(57) **Zusammenfassung**

Die Erfindung betrifft einen Halter (10) für einen Sensor (12), insbesondere Ultraschallsensor, für ein Parkhilfesystem , mit einem hülsenförmigen Körper (18), in welchen der Sensor (12) über eine Einschuböffnung (28) einschiebbar ist, wobei Mittel (26) vorgesehen sind, die die Einschuböffnung (28) in Achsrichtung derart überragen, dass nur bestimmte Sensoren (12) in den Körper (18) des Halters (10) vollständig einschiebbar sind.

## Beschreibung

Die Erfindung betrifft einen Halter für einen Sensor, insbesondere Ultraschallsensor für ein Parkhilfesystem, mit einem hulsenförmigen Korper, in welchen der Sensor über eine Einschuböffnung einschiebbar ist.

Derartige Halter sind in einer Vielzahl bekannt und dienen dazu, den Ultraschallsensor, mit welchem Ultraschallsignale ausgesandt und wieder empfangen werden, im Bereich einer Stoßstange eines Fahrzeugs zu befestigen. Hierfur wird der Halter in eine geeignete Öffnung am Fahrzeug eingeschoben und dort fixiert. Außerdem dient der Halter dazu, den Ultraschallsensor nicht nur aufzunehmen, sondern auch lagerichtig zu halten, so dass die ausgesandten Ultraschallsignale in die gewünschte Richtung abgestrahlt werden und nur aus bestimmten Richtungen reflektierte Ultraschallsignale empfangen werden können.

Für unterschiedliche Fahrzeuge beziehungsweise Einbauverhältnisse werden unterschiedlich gestaltete Ultraschallsensoren verwendet. Dies können zum Beispiel Ultraschallsensoren sein, deren Steckeranschluss am hinteren Ende des Ultraschallsensors, das heißt der Membran gegenüberliegend, in axialer Richtung abragen, wobei derartige Ultraschallsensoren sehr schlank, jedoch lang sind. Andere Ultraschallsensoren besitzen einen Steckeranschluss, der am hinteren Ende orthogonal, das heißt radial absteht, wobei diese Ultraschallsensoren kürzer bauen, jedoch einen seitlichen Zugang zum Steckeranschluss benotigen. Beide Ultraschallsensoren können beim Stand der Technik vom gleichen Halter aufgenommen werden, so dass das Problem entsteht, dass mit derartigen Haltern und Ultraschallsensoren vormontierte Stoßstangen eventuell nicht mehr am Fahrzeug befestigt werden können, da die Halter mit den falschen Ultraschallsensoren bestückt worden sind. Entweder kollidieren dann die axial abragenden Steckeranschlusse mit anderen Bauteilen des Fahrzeugs, da der Ultraschallsensor zu lang ist, oder die Steckeranschlüsse können nicht mit den Steckern bestückt werden, da sie aufgrund des verwendeten falschen Ultraschallsensors in radialer Richtung und nicht in axialer Richtung abragen.

Der Erfindung liegt daher die Aufgabe zugrunde, einen Halter für einen Sensor bereitzustellen, der nur mit dem korrekten Ultraschallsensor bestückt werden kann.

Diese Aufgabe wird mit einem Halter der eingangs genannten Art erfindungsgemäß dadurch gelöst, dass Mittel vorgesehen sind, die die Einschuböffnung in Achsrichtung derart überragen, dass nur bestimmte Sensoren in den Körper des Halters vollständig einschiebbar sind.

Die Ultraschallsensoren weisen im Prinzip gleiche Geometrien auf, weshalb auch das Problem entsteht, dass die Halter mit den falschen Ultraschallsensoren bestuckt werden können. Beim erfindungsgemäßen Halter können ebenfalls alle Sensoren eingesetzt werden, jedoch nur der korrekte Sensor kann vollständig in den Halter eingeschoben werden, so dass der Sensor im Halter auch verrastet. Dadurch wird verhindert, dass die Halter mit den falschen Sensoren bestückt werden.

Bei einer Weiterbildung ist vorgesehen, dass die Mittel als wenigstens ein die Einschuböffnung in Achsrichtung überragender Zapfen ausgebildet ist. Dadurch wird sowohl der Querschnitt der Einschuböffnung als auch der Innenquerschnitt des hülsenförmigen Körpers nicht verändert, so dass am Ultraschallsensor selbst keine Änderungen der Abmessungen vorgenommen werden müssen. Der die Einschuböffnung in Achsrichtung uberragende Zapfen verhindert lediglich, dass ein falscher Sensor vollstandig eingeschoben werden kann, beziehungsweise erlaubt der Zapfen, dass lediglich der korrekte Sensor vollständig bis zum Verrasten im Halter eingeschoben werden kann.

Mit Vorzug sind die Mittel an der Außenseite des Körpers angesetzt. Dies bedeutet, wie bereits erwähnt, dass an der Kontur des Ultraschallsensors keine Änderungen vorgenommen werden müssen, so dass der Ultraschallsensor beziehungsweise das Gehause des Ultraschallsensors bis auf den Bereich des Steckeranschlusses mit dem gleichen Werkzeug hergestellt werden kann.

Bei einer besonders bevorzugten Ausführungsform der Erfindung ist vorgesehen, dass die Mittel als Fortsetzung einer Rippe des hülsenformigen Körpers ausgebildet sind. Hierdurch wird die Möglichkeit geschaffen, dass lediglich kleine Änderungen an den Spritzgusswerkzeugen für den Halter erforderlich sind, und dass eventuell sogar Halter mit und Halter ohne diese Mittel mit dem gleichen Spritzgusswerkzeug herstellbar sind. Dies kann zum Beispiel durch leichte Modifikation des Spritzgusswerkzeugs erfolgen.

Bei einem Ausführungsbeispiel ist vorgesehen, dass die Mittel mit einer Sollbruchstelle an den Korper angeformt sind. Dies hat den Vorteil, dass stets gleiche Halter hergestellt werden, wobei bei den Haltern, die ohne diese Mittel eingesetzt werden sollen, die Mittel an der Sollbruchstelle abgetrennt werden.

Erfindungsgemäß sind die Mittel in dem Bereich am hülsenförmigen Körper vorgesehen, der einem Steckeranschluss des Sensors benachbart ist. Mit diesem Mittel wird also überwacht, wie der Steckeranschluss am Ultraschallsensor angeordnet ist, so dass lediglich diejenigen Ultraschallsensoren vollstandig in den Halter eingeschoben werden konnen, bei denen die Mittel nicht mit dem Steckeranschluss kollidieren.

Vorzugsweise sind die Mittel einstuckig am Korper angeformt. Dabei können die Mittel und der Körper auch aus dem gleichen Material bestehen. Es ist jedoch auch denkbar, dass die Mittel als Einlegeteil ausgebildet sind, welches vom Material des Körpers umspritzt wird und von diesem gehalten wird.

Weitere Vorteile, Merkmale und Einzelheiten der Erfindung ergeben sich aus der nachfolgenden Beschreibung, in der unter Bezugnahme auf die Zeichnung ein besonders bevorzugtes Ausführungsbeispiel im Einzelnen beschrieben ist. Dabei können die in der Zeichnung dargestellten sowie in den Ansprüchen und in der Beschreibung erwahnten Merkmale jeweils einzeln für sich oder in beliebiger Kombination erfindungswesentlich sein.

In der Zeichnung zeigen:
- Figur 1: eine perspektivische Ansicht des Halters;
- Figur 2: eine weitere perspektivische Ansicht des Halters;
- Figur 3: eine perspektivische Ansicht des Halters mit vollständig eingeschobenem Sensor; und
- Figur 4: eine perspektivische Ansicht des Halters mit nur teilweise eingeschobenem falschem Sensor.

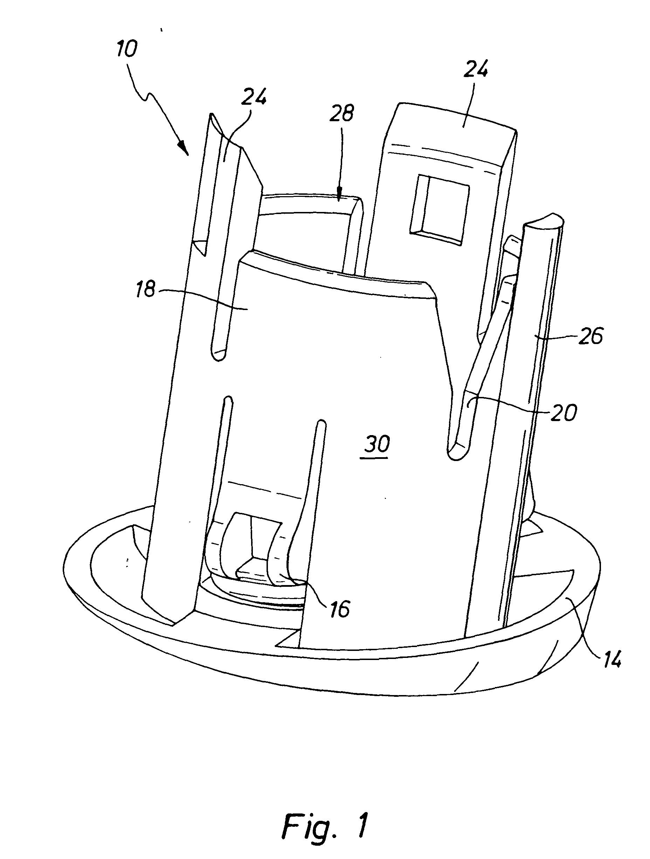

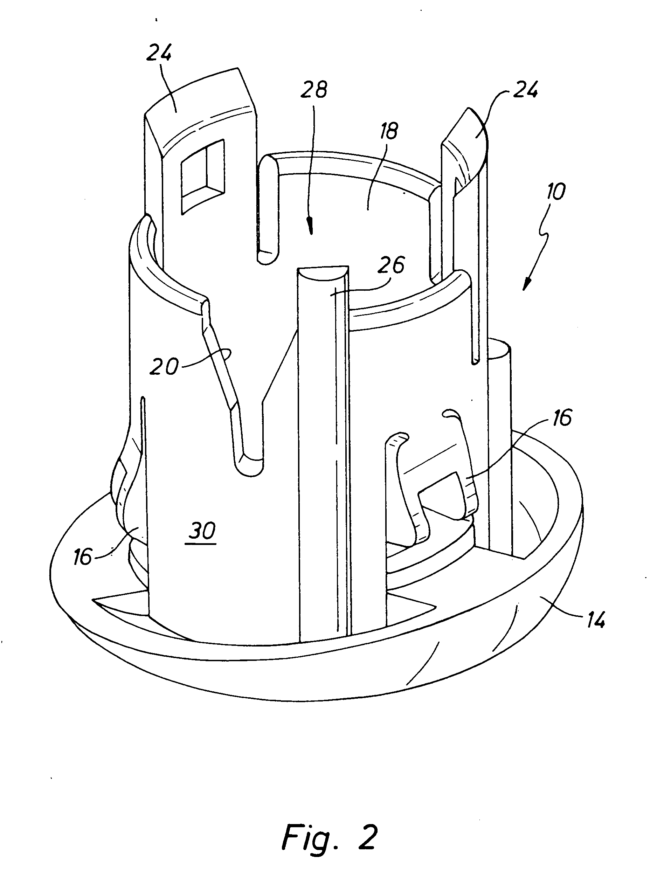

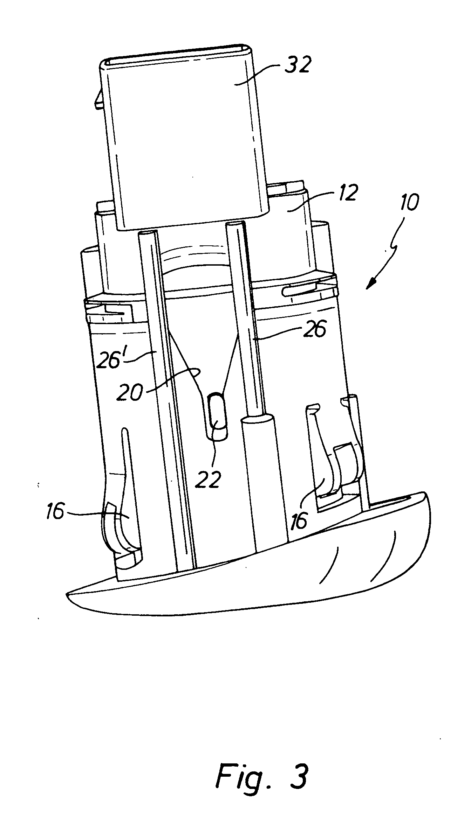

Die Figuren 1 und 2 zeigen einen insgesamt mit 10 bezeichneten Halter, in welchen ein Sensor 12 (Figur 3) einschiebbar ist. Der Halter 10 weist an seinem einen Ende, dem später das Schall abgebende Ende des Sensors 12 zugeordnet ist, einen Umfangswulst 14 auf, der zum Beispiel an der Außenseite einer Stoßstange anliegt. Über Federelemente 16 wird der Halter 10 verliersicher an dieser Stoßstange befestigt, indem diese Federelemente 16 an der Ruckseite der Stoßstange angreifen und die Einschuboffnung übergreifen. Bei eingeschobenem Sensor 12 sind die Federelemente 16 gegen eindrucken gesichert.

An den Umfangswulst 14 schließt sich ein hülsenformiger Körper 18 an, der den Sensor 12 umschließt und in seiner Lage fixiert. Zur korrekten Drehlage des Sensors besitzt der hulsenförmige Körper 18 eine Y-formige Aufnahme 20, in welche eine vom Sensor 12 radial abstehende Zentrierwarze 22 einschiebbar ist. Bei vollständig eingeschobenem Sensor 12 liegt die Zentrierwarze 12 am Grund der Aufnahme 20 an. Ferner sind in den Figuren 1 und 2 Rastlaschen 24 erkennbar, in welche an der Außenseite des Sensors 12 vorgesehene Rastnasen einrasten, wenn der Sensor 12 seine endgültige Lage im Körper 18 einnimmt.

In den Figuren 1 und 2 ist außerdem ein Zapfen 26 vorgesehen, der die Einschuboffnung 28 des hülsenformigen Körpers 18 in axialer Richtung überragt. Der Zapfen 26 ist dabei auf die Außenoberfläche 30 des Körpers 18 aufgesetzt und verandert deshalb nicht die Querschnittsfläche der Einschuböffnung 28 und behindert dadurch nicht das Einschieben des Sensors 12 in die Einschuböffnung 28.

Aus Figur 3 ist deutlich erkennbar, dass der Sensor 12 einen Steckeranschluss 32 aufweist, der am hinteren Ende des Sensors 12 vorgesehen ist und axial nach hinten und radial übersteht. Außerdem ist erkennbar, dass der Steckeranschluss 32 axial auf dem Zapfen 26 aufsitzt, wobei der Halter 10 in der Figur 3 noch einen zweiten Zapfen 26' aufweist, der die gleiche Funktion besitzt, wie der Zapfen 26. Die Länge des Zapfens 26 (und des Zapfens 26') ist so gewählt, dass der Steckeranschluss 32 gerade dann am Zapfen 26 anliegt, wenn er vollständig in den Halter 10 beziehungsweise in den hülsenförmigen Korper 18 eingeschoben ist und die Zentrierwarze 22 gerade am unteren Ende der Aufnahme 20 anliegt. Dabei verrasten die Rastnasen des Sensors 12 mit den Rastlaschen 24 des Halters 10. Dies signalisiert einer Bedienperson, dass der korrekte Sensor 12 in den Halter 10 eingeschoben und verrastet worden ist.

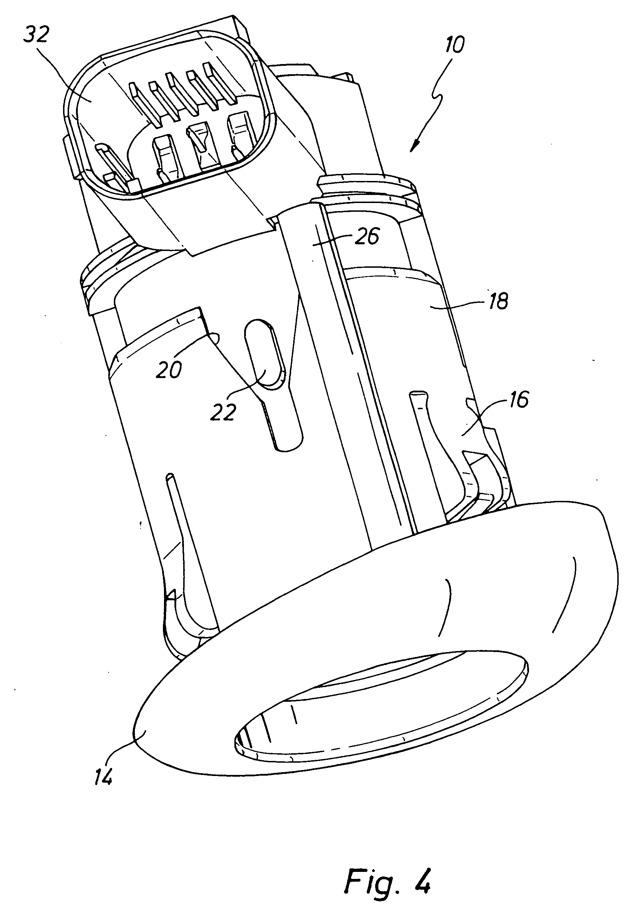

In der Figur 4 ist der Halter 10 mit einem anderen Sensor 12 bestuckt, der einen Steckeranschluss 32 aufweist, der abgewinkelt ist und orthogonal zur Längsachse des Sensors 12 absteht. Auch dieser Steckeranschluss 32 liegt am freien Ende des Zapfens 26 an. Dabei ist der Sensor 12 aber nicht vollständig in den Körper 18 des Halters 10 eingeschoben. Die Rastnasen können nicht mit den Rastlaschen 24 verrasten. Dies zeigt einer Bedienperson an, dass der Halter 10 mit einem falschen Sensor 12 bestückt ist, da der Sensor 12 nicht verrastbar ist.

Ohne den Zapfen 26 konnte der falsche Sensor 12 in den Halter 10 eingeschoben und im Halter 10 verrastet werden, was von der Bedienperson eventuell nicht bemerkt wird. Dies könnte dann zu spateren Einbauproblemen oder zu Problemen beim Verbinden des Steckeranschlusses 32 mit dem entsprechenden Stecker führen.

Der Zapfen 26 bildet demnach eine Fehleinbausicherung für den Halter 10, so dass dieser nur mit korrekten Sensoren 12 bestückt werden kann.

## Patentansprüche

1. Halter (10) für einen Sensor (12), insbesondere Ultraschallsensor, für ein Parkhilfesystem , mit einem hülsenförmigen Körper (18), in welchen der Sensor (12) über eine Einschuböffnung (28) einschiebbar ist, **dadurch gekennzeichnet, dass** Mittel (26) vorgesehen sind, die die Einschuboffnung (28) in Achsrichtung derart überragen, dass nur bestimmte Sensoren (12) in den Körper (18) des Halters (10) vollstandig einschiebbar sind.

2. Halter für einen Sensor nach Anspruch 1, **dadurch gekennzeichnet, dass** die Mittel (26) als wenigstens ein die Einschuböffnung (28) in Achsrichtung überragender Zapfen (26) ausgebildet ist.

3. Halter für einen Sensor nach einem der vorhergehenden Ansprüche, **dadurch gekennzeichnet, dass** die Mittel (26) an der Außenseite des Korpers (18) angesetzt sind.

4. Halter für einen Sensor nach einem der vorhergehenden Ansprüche, **dadurch gekennzeichnet, dass** die Mittel (26) als Fortsetzung einer Rippe des hülsenförmigen Körpers (18) ausgebildet sind.

5. Halter für einen Sensor nach einem der vorhergehenden Ansprüche, **dadurch gekennzeichnet, dass** die Mittel (26) mit einer Sollbruchstelle an den Körper (18) angeformt sind.

6. Halter für einen Sensor nach einem der vorhergehenden Ansprüche, **dadurch gekennzeichnet, dass** die Mittel (26) in dem Bereich am hülsenförmigen Körper (18) vorgesehen sind, der einem Steckeranschluss (32) des Sensors (12) benachbart ist.

7. Halter für einen Sensor nach einem der vorhergehenden Ansprüche, **dadurch gekennzeichnet, dass** die Mittel (26) mit einem Sensor (12) kollidieren, der einen zur Sensorachse orthogonal abgewinkelten Steckeranschluss (32) aufweist.

8. Halter für einen Sensor nach einem der vorhergehenden Ansprüche, **dadurch gekennzeichnet, dass** die Mittel (26) einstückig am Körper (18) angeformt sind.

9. Halter für einen Sensor nach einem der vorhergehenden Ansprüche, **dadurch gekennzeichnet, dass** die Mittel (26) und der Körper (18) aus dem gleichen Material sind.

10. Halter für einen Sensor nach einem der vorhergehenden Ansprüche, **dadurch gekennzeichnet, dass** die Mittel (26) ein Verrasten eines falschen Sensors (12) mit dem Halter (10) verhindern.
